# DEMANDE DE BREVET EUROPEEN

(11) **EP 2 306 343 A1**
(43) Date de publication de la demande: **06.04.2011**
(21) Numéro de dépôt: 10173845.8
(22) Date de dépôt: 24.08.2010
(51) Int. Cl.: G06F 17/30

(54) **Procédé d'enrichissement d'un flux média délivré à un utilisateur**

(30) Priorité: 30.09.2009 FR 0904676
(71) Demandeur: Alcatel Lucent, 75007 Paris (FR)
(72) Inventeur: Squedin, Sylvain, 91620 Nozay (FR); Delegue, Gérard, 91620 Nozay (FR); Baynaud, Erwan, 91620, Nozay (FR); Obled, Corinne, 91620 Nozay (FR)
(74) Mandataire: Shamsaei Far, Hassan

(57) **Abrégé**

L'invention concerne un procédé d'enrichissement d'un flux média délivré à un utilisateur dans lequel ledit utilisateur identifie au moins une séquence dudit flux média à enrichir, ledit procédé prévoyant la création d'un objet média comprenant des métadonnées relatives à la séquence média identifiée ainsi que des contenus média générés à partir de ladite séquence, ledit objet étant mis à disposition pour permettre son utilisation ultérieure par l'utilisateur et/ou par une application.

## Description

L'invention concerne un procédé d'enrichissement d'un flux média délivré à un utilisateur, ainsi qu'une architecture pour une plateforme service d'enrichissement d'un flux média délivré à un utilisateur.

Selon une étude publiée en 2008 par la société The Nielsen Company, un américain moyen passe plus de quatre heures par jour devant la télévision, soit vingt-huit heures par semaine, ce qui représente deux mois de télévision par an. En soixante-cinq ans de vie, l'américain moyen aura donc passé 9 ans devant son poste. Avec de tels chiffres, on peut affirmer sans trop se tromper que la télévision est l'un des principaux vecteurs d'information et de divertissement.

Les informations transmises dans un flux média, qu'il s'agisse par exemple d'un programme télévisé ou diffusé à la radio, ne sont pas persistantes comme celles consultables sur une page web et ne sont donc plus disponibles une fois la délivrance du flux média terminée.

De ce fait, l'utilisateur préfère indiquer son intérêt, par exemple au moyen d'un signet électronique, pour consulter ledit signet après avoir fini de consulter le flux média. En effet, l'utilisateur ne souhaite pas arrêter de consulter le flux média qu'il reçoit pour chercher sur Internet les informations liées au contenu dudit flux.

Généralement, lorsqu'un utilisateur est intéressé par un point particulier du flux média qu'il reçoit, il peut noter ledit point sur un simple Post-It® pour rechercher ensuite sur Internet des services ou des informations reliées audit point. Il existe toutefois des solutions plus performantes.

Parmi les solutions proposées à un utilisateur pour marquer un intérêt lié au flux média qu'il reçoit, notons l'existence de sites Internet tels que Delicious® ou Yoolink®, sortes de moteurs de recherche collaboratifs qui permettent à un utilisateur de créer, de stocker et de partager des signets électroniques avec d'autres utilisateurs.

Ces solutions manquent cependant d'interactivité, car elles ne permettent pas à un utilisateur d'indiquer en temps réel son centre d'intérêt dans le flux média qu'il reçoit. En outre, ces solutions ne permettent pas à l'utilisateur de créer et d'enrichir son centre d'intérêt en générant un modèle de données pour ledit centre d'intérêt, afin de développer des applications innovantes autour dudit centre d'intérêt.

L'invention vise à perfectionner l'art antérieur en permettant à un utilisateur recevant un flux média d'indiquer à n'importe quel moment son centre d'intérêt relatif à une séquence média dudit flux, d'extraire et d'enrichir ledit centre d'intérêt pour un usage ultérieur tout en proposant l'accès dudit centre d'intérêt à des applications innovantes.

A cet effet, selon un premier aspect, l'invention propose un procédé d'enrichissement d'un flux média délivré à un utilisateur dans lequel ledit utilisateur identifie au moins une séquence dudit flux média à enrichir, ledit procédé prévoyant la création d'un objet média comprenant des métadonnées relatives à la séquence média identifiée ainsi que des contenus média générés à partir de ladite séquence, ledit objet étant mis à disposition pour permettre son utilisation ultérieure par l'utilisateur et/ou par une application.

Selon un deuxième aspect, l'invention propose une architecture pour une plateforme service d'enrichissement d'un flux média délivré à un utilisateur, ladite architecture comprenant :
- un module d'identification d'une séquence média par ledit utilisateur ;
- une application de création d'un objet média comprenant :
   ■ au moins un module de création de contenus média à partir de la séquence média identifiée ;
   ■ au moins un module de création de métadonnées relatives à la séquence média identifiée ;
- au moins un module de mise à disposition dudit objet média pour permettre son utilisation ultérieure par l'utilisateur et/ou par une application.

D'autres particularités et avantages de l'invention apparaîtront dans la description qui suit, faite en référence aux figures annexées dans lesquelles :

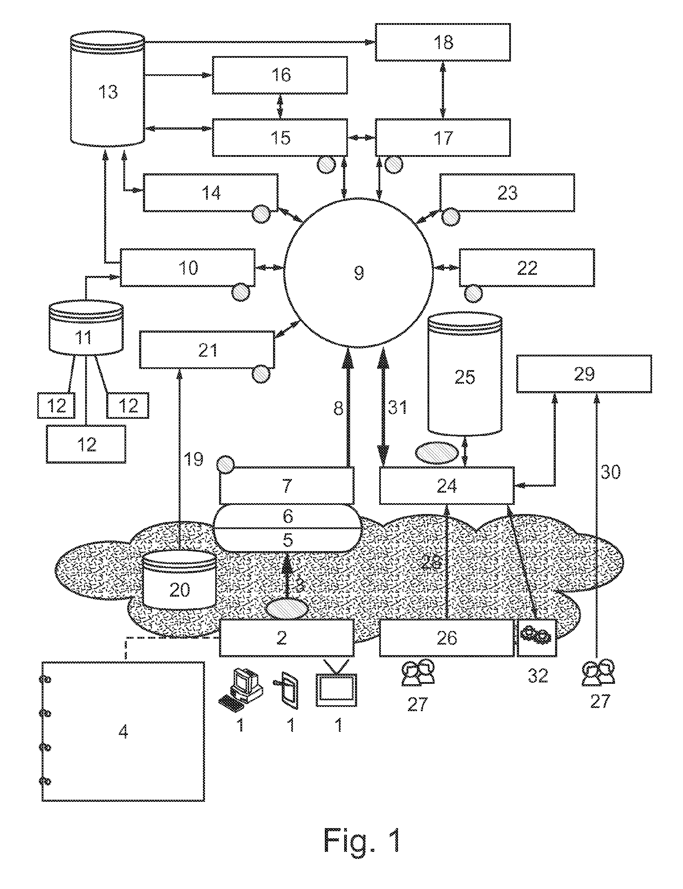

- la figure 1 représente une architecture pour une plateforme service d'enrichissement d'un flux média délivré à un utilisateur, selon un mode de réalisation de l'invention ;
- la figure 2 représente un objet média obtenu par un procédé selon un mode de réalisation de l'invention, dans lequel le flux média est une vidéo.

En relation avec ces figures, on décrit ci-dessous une architecture pour une plateforme service d'enrichissement d'un flux média délivré à un utilisateur par l'intermédiaire de son terminal 1. Le terminal 1 peut être un terminal fixe, comme un ordinateur personnel ou un poste de télévision. Le terminal 1 peut également être un terminal portable, par exemple un assistant personnel (PDA, pour Personal Digital Assistant).

En outre, le flux média délivré à l'utilisateur peut être de nature audio et/ou vidéo. Selon un mode de réalisation préférentiel, le flux média est un flux audio et vidéo.

L'invention prévoit que l'utilisateur identifie dans le flux média qu'il reçoit une séquence média à enrichir, ladite séquence média se rapportant notamment à un centre d'intérêt dudit utilisateur. Par exemple, si le flux média est une vidéo, le centre d'intérêt de l'utilisateur peut se rapporter à une personne ou à un objet présent dans ladite vidéo.

Pour cela, le terminal 1 comprend des moyens 2 pour permettre à l'utilisateur d'émettre une requête 3 comprenant une liste 4 d'attributs, ladite liste comprenant des informations sur des métadonnées et des contenus média souhaités par ledit utilisateur pour l'enrichissement de ladite séquence média. La liste 4 d'attributs est non exhaustive, et peut comprendre des informations relatives à l'utilisateur et/ou à son terminal 1, par exemple l'identifiant dudit utilisateur, l'adresse IP dudit terminal, ou encore la localisation géographique dudit utilisateur et/ou dudit terminal. La liste 4 d'attributs peut également comprendre des informations relatives au flux média, par exemple sa catégorie, sa durée, l'identifiant ISAN de son contenu (pour l'anglais International Standard Audiovisual Number) ou encore sa source.

L'utilisateur envoie à la plateforme service par l'intermédiaire de son terminal 1 la requête 3 comprenant la liste 4 d'attributs définie précédemment. Plus précisément, la plateforme service comprend une interface 5 de programmation (API, pour l'anglais Application Programming Interface), ladite interface comprenant des moyens 6 de traitement de la requête 3 et de la liste 4 d'attributs.

L'architecture comprend un module 7 d'identification d'une séquence média par un utilisateur, ledit module est activé par la requête 3 comprenant la liste 4 d'attributs. Le module 7 transmet des informations 8 sur la séquence média identifiée à une application 9 de création d'un objet média relativement à la liste 4 d'attributs et au cadre d'application (pour l'anglais framework) prédéfini par l'interface 5 pour ledit objet. Les informations 8 se rapportent aux attributs de la liste 4 relatifs aux contenus média et aux métadonnées souhaités par l'utilisateur pour l'enrichissement de la séquence média.

L'application 9 comprend des moyens pour séquencer la création de l'objet média relatif à la séquence média identifiée par le module 7, et ce en fonction des informations 8 sur les métadonnées et/ou les contenus média souhaités par l'utilisateur.

L'application 9 comprend au moins un module de création de contenus média à partir de la séquence média identifiée par le module 7, et ce relativement à la liste 4 d'attributs comprise dans la requête 3 envoyée par l'utilisateur.

Selon un mode de réalisation, les contenus média comprennent un extrait du flux média, ledit extrait étant généré autour d'un marquage temporel de la séquence média identifiée. Selon un autre mode de réalisation, l'extrait du flux média peut être généré autour d'un identifiant de trame (pour l'anglais frame ID) de ladite séquence.

Pour ce faire, l'application 9 comprend un module 10 de création d'un tel extrait. Le module 10 comprend un algorithme capable d'analyser certains éléments du flux média situés autour du marqueur temporel de la séquence média afin d'identifier et de générer à partir dudit flux l'extrait le plus pertinent au vu dudit marqueur. Par exemple, lorsque le flux média est une vidéo, l'algorithme du module 10 analyse l'ensemble des scènes autour du marqueur temporel afin d'éviter de couper entre deux scènes lors de la génération de l'extrait dudit flux.

L'architecture comprend des moyens 11 pour stocker en mémoire tampon cyclique les contenus de tous les services 12 de fourniture de flux média, le module 10 utilisant lesdits contenus pour générer un extrait du flux média relatif à la séquence média identifiée. Les services 12 de fourniture de flux média peuvent être par exemple des services de fourniture de vidéo à la demande (VoD, pour l'anglais Video on Demand), des services de fourniture de télévision satellite ou de télévision numérique terrestre (TNT).

L'architecture comprend en outre une base de données 13 dans laquelle le module 10 peut envoyer les extraits de flux média générés par ledit module afin que lesdits extraits soient stockés en vue de leur utilisation ultérieure par l'application 9 pour poursuivre le procédé d'enrichissement.

L'application 9 comprend en outre au moins un module de création de métadonnées relatives à la séquence média identifiée par le module 7, et ce relativement à la liste 4 d'attributs comprise dans la requête 3 envoyée par l'utilisateur.

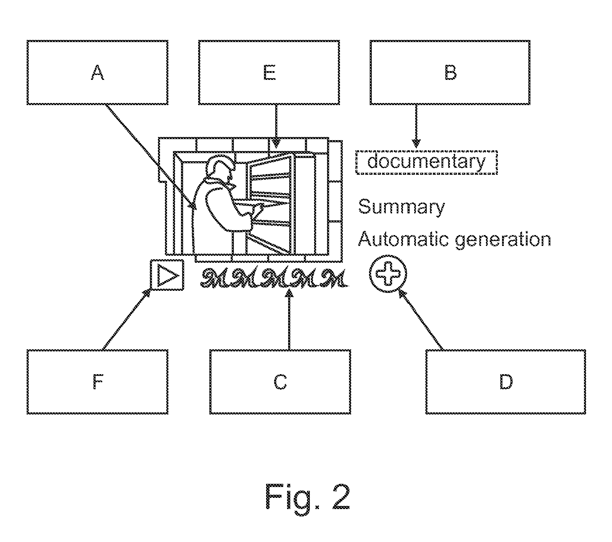

Selon un mode de réalisation, le procédé prévoit que les contenus média soient mis à disposition de l'utilisateur sous la forme d'une vignette A se rapportant à un élément desdits contenus média générés. Par exemple, en relation avec la figure 2, le flux média délivré à l'utilisateur peut être une vidéo et la vignette A peut se rapporter à une personne visible dans un extrait de ladite vidéo.

Pour ce faire, l'application 9 comprend un module 14 de création d'une vignette. Le module 14 peut en outre utiliser l'extrait du flux média préalablement généré par le module 10 et stocké dans la base de données 13 pour identifier dans ledit extrait l'élément se rapportant au centre d'intérêt de l'utilisateur, ledit élément étant identifié au moyen du marqueur temporel ou de l'identifiant de trame préalablement utilisé par le module 10 pour générer ledit extrait.

Le module 14 comprend un algorithme spécifique qui permet d'identifier selon certains critères la vignette A qui convient le mieux, par exemple en termes de couleurs, de luminosité et/ou de contexte. Ces critères peuvent se rapporter à la nature de l'élément de contenu média, selon que ledit élément est un personnage ou un objet identifiable dans l'extrait du flux média ou un événement survenant dans ledit extrait.

L'extrait de flux média complété avec ladite vignette peut ensuite être à son tour stocké dans la base de données 13 en vue de son utilisation ultérieure par l'application 9 pour poursuivre le procédé d'enrichissement.

Selon un mode de réalisation, et en fonction de la nature du flux média délivré à l'utilisateur, les métadonnées et/ou les contenus média sont générés au moyen d'une analyse audio et/ou vidéo de la séquence média identifiée.

En outre, l'application 9 comprend un module 15 de création d'un résumé pour l'objet média, ledit résumé pouvant se rapporter à l'extrait du flux média préalablement généré. En particulier, le module 15 comprend des moyens pour importer de la base de données 13 ledit extrait stocké dans ladite base.

Le module 15 comprend des moyens 16 d'analyse audio dudit extrait pour générer un résumé sous forme de texte dudit extrait. Par exemple, le module 15 peut utiliser comme moyen 16 un moteur de conversion de la voix en texte (pour l'anglais speech-to-text).

En outre, le module 15 comprend un algorithme spécifique pour distinguer dans le résumé généré plusieurs catégories de mots, par exemple les pronoms personnels, les adjectifs, les mots invariables et/ou les onomatopées. Ces résultats peuvent être utilisés ultérieurement par l'application 9 pour poursuivre le procédé d'enrichissement.

L'extrait de flux média complété avec le résumé et les résultats fournis par l'algorithme spécifique du module 15 peut ensuite être à son tour stocké dans la base de données 13 en vue de son utilisation ultérieure par l'application 9 pour poursuivre le procédé d'enrichissement.

Selon un mode de réalisation, les métadonnées sont mises à disposition de l'utilisateur au moyen d'onglets B. L'application comprend un module 17 de création desdits onglets. En particulier, le module 17 comprend des moyens pour importer l'extrait du flux média préalablement généré et complété avec les métadonnées et/ou les contenus média souhaités par l'utilisateur.

Le module 17 comprend des moyens 18 d'analyse vidéo de l'extrait du flux média pour chercher dans ledit extrait des éléments importants et créer des onglets B relatifs auxdits éléments. Par exemple, si le flux média est une vidéo, les moyens 18 d'analyse vidéo cherchent dans l'extrait de ladite vidéo préalablement généré les personnages et/ou les objets visibles pour leur associer des onglets B.

Selon un mode de réalisation, en relation avec la figure 2, les onglets B peuvent être disposés à côté de l'icône de l'objet média.

Le module 17 peut également créer des onglets B relatifs au résumé de l'extrait du flux média préalablement généré par le module 15. Pour ce faire, les modules 15, 17 peuvent comprendre des moyens pour échanger ledit résumé et les résultats fournis par l'algorithme spécifique du module 15. Le module 17 comprend en outre des moyens pour créer dans ledit résumé et à partir desdits résultats des onglets B. Ces onglets B peuvent selon un mode de réalisation se présenter sous la forme de liens interactifs présents dans ledit résumé.

En outre, en relation avec la figure 2, le module 17 peut créer un onglet B relatif au résumé de l'extrait du flux média préalablement généré par le module 15, ledit onglet mettant à disposition de l'utilisateur ledit résumé en tant que métadonnée de l'objet média.

Selon un mode de réalisation, les onglets générés peuvent se rapporter à des métadonnées 19 importées de bases de données 20 extérieures à la plateforme service. Ces bases de données 20 peuvent être par exemple celles d'un site Internet ou d'un magazine de télévision. L'application 9 comprend un module 21, ledit module intégrant des moyens pour importer de telles métadonnées relatives à la séquence média identifiée et rattacher lesdites métadonnées à l'objet média créé.

Le module 21 présente également des moyens pour compléter la liste 4 d'attributs initiale pour l'objet média ou pour créer pour ledit objet média de nouveaux champs de description.

En relation avec la figure 2, le module 17 peut générer un onglet C relatif à l'indice de fréquentation de l'objet média par l'utilisateur et/ou par d'autres utilisateurs, ledit indice figurant dans la liste 4 d'attributs de la requête 3 de l'utilisateur d'origine. Cet onglet peut se présenter, comme représenté, sous la forme d'une série de symboles transparents se remplissant au fur et à mesure de l'augmentation de l'indice de fréquentation de l'objet média.

Selon un mode de réalisation, en relation avec la figure 2, le module 17 peut créer un onglet D relatif au rapport entre la taille de l'icône de l'objet média et la longueur de la liste d'onglets B générés par ledit module figurant sur la droite de l'icône. L'utilisateur peut, en agissant sur l'onglet D par l'intermédiaire de son terminal 1, à l'aide par exemple d'un périphérique dudit terminal, consulter la liste complète des onglets B de l'icône, ou clore ladite liste pour préserver la lisibilité dudit icône.

Lorsque tous les contenus média et toutes les métadonnées souhaités par l'utilisateur ont été créés par l'application 9, le procédé peut prévoir la génération d'un indicateur E prenant en compte la liste 4 d'attributs requise, l'usage fait de l'objet média et/ou une note donnée audit objet média par les utilisateurs.

Pour ce faire, l'application 9 comprend un module 22 de création d'un tel indicateur E , ledit module comprenant une fonction de calcul d'un coefficient à partir de la liste 4 d'attributs, de l'usage fait de l'objet média et/ou d'une note donnée audit objet média et des moyens pour créer un indicateur E à partir dudit coefficient.

En relation avec la figure 2, l'indicateur E peut prendre une forme visuelle, par exemple celle d'un quadrillage dont le remplissage des cases se fait au fur et à mesure de la création de nouveaux contenus média et/ou de métadonnées relatives à la séquence média identifiée, ledit remplissage étant en outre fonction de l'usage fait de l'objet média et des notes données audit objet par les utilisateurs.

L'architecture comprend au moins un module de mise à disposition de l'objet média créé par l'application 9 pour permettre son utilisation ultérieure par l'utilisateur et/ou par une application. En particulier, l'architecture comprend un module 23 permettant de gérer la mutualisation de l'objet média créé par l'application 9 avec les métadonnées et les contenus média générés par ladite application relativement à la séquence média identifiée par l'utilisateur.

Le module 23 permet de calculer la corrélation de l'extrait du flux média généré et de déterminer les similarités des objets média pour fusionner et mettre en commun tous les contenus média et toutes les métadonnées générés par l'application 9.

L'architecture comprend en outre un module 24 de gestion de l'objet média créé et mutualisé, ledit module recevant ledit objet média de l'application 9. Le module 24 comprend des moyens pour stocker l'objet média dans une base de données 25 de ladite architecture et des moyens pour référencer ledit objet en vue de son utilisation ultérieure par l'utilisateur et/ou par une application.

Ainsi, l'architecture comprend une interface 26 permettant à un utilisateur 27 d'accéder à l'objet média référencé, ladite interface étant publique. L'utilisateur 27 peut être celui qui a envoyé depuis son terminal 1 la requête 3 pour la création dudit objet média ou un autre utilisateur souhaitant utiliser ledit objet.

Lorsqu'un utilisateur 27 souhaite accéder à l'objet média, il envoie une requête 28 au module 24 de gestion dudit objet média par l'intermédiaire de l'interface 26, ledit module comprenant des moyens pour extraire ledit objet média de la base de données 25.

L'architecture comprend en outre un module 29 d'enrichissement manuel de l'objet média, ledit module comprenant des moyens pour permettre à un utilisateur 27 d'éditer et d'annoter ledit objet. L'utilisateur 27 envoie pour cela une requête 30 au module 29 d'enrichissement manuel.

Le module 29 d'enrichissement manuel comprend en outre des moyens pour solliciter le module 24 de gestion de l'objet média afin que ledit module de gestion extraie ledit objet de la base de données 25 et envoie ledit objet avec une requête 31 à l'application 9 pour relancer au moins en partie un procédé d'enrichissement en vue d'éditer ledit objet.

En particulier, la requête 31 permet la mutualisation par le module 23 de l'objet média à éditer avec les contenus média et/ou les métadonnées ainsi créés.
En outre, l'utilisateur 27 peut envoyer une requête 30 au module 29 pour éditer manuellement l'objet média, par exemple en y ajoutant des métadonnées.

Selon un mode de réalisation, l'objet média est sauvegardé dans la base de données 25 et référencé pour être accessible par l'interface de programmation d'une application.

En outre, le procédé peut prévoir que l'objet média soit sauvegardé dans la base de données 25 et référencé pour être accessible à l'interface de programmation d'une application pour développer un service 32 offrant de nouvelles fonctionnalités autour dudit objet média. Selon un mode de réalisation de l'invention, le service 32 peut être implanté dans l'architecture de la plateforme.

L'interface de programmation peut être basée sur le modèle existant d'Apple Store® et proposer en outre aux fournisseurs de services 32 un kit de développement logiciel (SDK, pour l'anglais Software Development Kit) d'usage payant pour développer de tels services autour d'un objet média.

Pour ce faire, le module 24 de gestion de l'objet média peut comprendre des moyens spécifiques pour interagir avec l'application pour le service 32. En outre, le module 24 peut également envoyer ledit objet avec une requête 31 à l'application 9 pour éditer ledit objet média en fonction des interactions avec ladite application.

L'application peut utiliser l'objet média extrait pour créer un service 32 permettant d'expliquer à un utilisateur 27 ultérieur dudit objet comment générer de nouvelles applications autour dudit objet et comment utiliser les métadonnées générées en relation avec ledit objet pour interagir avec d'autres applications.

En particulier, un tel service utilise une partie des métadonnées de l'objet média générées par l'application 9 pour accéder à d'autres informations. Par exemple, les onglets de l'objet média peuvent être des liens vers des sites Internet tels que Wikipedia® et/ou des moteurs de recherche tels que Google®.

L'application peut utiliser l'objet média pour créer un service 32 permettant à un utilisateur 27 ultérieur dudit objet de rejouer l'extrait du flux média relatif audit objet. On trouve par exemple de tels services sur les plateformes de fourniture de vidéo à la demande. En outre, le module 24 peut envoyer l'objet avec une requête 31 à l'application 9 pour la création par le module 17 d'un onglet F relatif à ce service.

L'application peut utiliser l'objet média pour créer un service 32 permettant à un utilisateur 27 ultérieur dudit objet d'acheter en ligne une sélection d'articles présents dans l'extrait du flux média relatif audit objet. Par exemple, si le flux média est une vidéo publicitaire, un utilisateur peut, en cliquant sur la vignette A relative à un article présent dans ladite vidéo, lancer une procédure d'achat dudit article.

L'application peut utiliser l'objet média pour créer un service 32 permettant à un utilisateur 27 ultérieur dudit objet de partager ledit objet avec ses contacts par l'intermédiaire d'un système connu de communication, par exemple un courrier électronique, un message texte (SMS, pour l'anglais Short Message Service), un message texte et/ou multimédia (MMS, pour l'anglais Multimedia Message Service), ou encore un message instantané.

En outre, la création d'un tel service de partage permet indirectement d'accroître la fréquentation de la plateforme service. En effet, le message envoyé par un utilisateur 27 à ses contacts peut comprendre un lien invitant lesdits contacts à venir consulter directement l'objet média que ledit utilisateur souhaite partager avec lesdits contacts sur ladite plateforme par l'intermédiaire de l'interface 26.

L'application peut utiliser l'objet média pour créer un service 32 permettant à un utilisateur 27 ultérieur dudit objet de créer de façon dynamique une salle de discussion (pour l'anglais chat room), le thème de ladite discussion portant sur le sujet de l'extrait du flux média relatif audit objet.

## Revendications

1. Procédé d'enrichissement d'un flux média délivré à un utilisateur dans lequel ledit utilisateur identifie au moins une séquence dudit flux média à enrichir, ledit procédé prévoyant la création d'un objet média comprenant des métadonnées relatives à la séquence média identifiée ainsi que des contenus média générés à partir de ladite séquence, ledit objet étant mis à disposition pour permettre son utilisation ultérieure par l'utilisateur et/ou par une application.

2. Procédé d'enrichissement selon la revendication 1, **caractérisé en ce que** la séquence média à enrichir est identifiée par l'utilisateur au moyen d'une requête (3) comprenant une liste (4) d'attributs, ladite liste comprenant des informations sur les métadonnées et les contenus média souhaités par ledit utilisateur pour l'enrichissement de ladite séquence média.

3. Procédé d'enrichissement selon la revendication 2, **caractérisé en ce qu'**il prévoit en outre la génération d'un indicateur (E) prenant en compte la liste (4) d'attributs requise, l'usage fait de l'objet média et/ou une note donnée audit objet média.

4. Procédé d'enrichissement selon l'une quelconque des revendications 1 à 3, **caractérisé en ce que** les contenus média comprennent un extrait du flux média, ledit extrait étant généré autour d'un marquage temporel de la séquence média identifiée.

5. Procédé d'enrichissement selon l'une quelconque des revendications 1 à 4, **caractérisé en ce que** les contenus média sont mis à disposition de l'utilisateur sous la forme d'une vignette (A) se rapportant à un élément desdits contenus média générés.

6. Procédé d'enrichissement selon l'une quelconque des revendications 1 à 5, **caractérisé en ce que** les métadonnées et/ou les contenus média sont générés au moyen d'une analyse audio et/ou vidéo de la séquence média identifiée.

7. Procédé d'enrichissement selon la revendication 6, **caractérisé en ce que** les métadonnées sont mises à disposition de l'utilisateur au moyen d'onglets (B).

8. Procédé d'enrichissement selon l'une quelconque des revendications 1 à 7, **caractérisé en ce que** l'objet média est sauvegardé et référencé pour être accessible par l'interface de programmation d'une application.

9. Architecture pour une plateforme service d'enrichissement d'un flux média délivré à un utilisateur, ladite architecture comprenant :
- un module (7) d'identification d'une séquence média par ledit utilisateur ;
- une application (9) de création d'un objet média comprenant :
■ au moins un module (10, 22) de création de contenus média à partir de la séquence média identifiée ;
■ au moins un module (14, 15, 17, 21) de création de métadonnées relatives à la séquence média identifiée ;
- au moins un module (23, 24, 29) de mise à disposition dudit objet média pour permettre son utilisation ultérieure par l'utilisateur et/ou par une application.

10. Architecture pour une plateforme service selon la revendication 9, **caractérisée en ce que** le module (7) d'identification est activé par une requête (3) comprenant une liste (4) d'attributs, ladite liste comprenant des informations sur les métadonnées et les contenus média souhaités par l'utilisateur, ladite architecture comprenant en outre un module (22) de création d'un indicateur (E) prenant en compte ladite liste d'attributs, l'usage fait de l'objet média et/ou une note donnée audit objet média..
